(19) Europäisches Patentamt
European Patent Office
Office européen des brevets

(11) Publication number : 0 491 622 A1

# (12) EUROPEAN PATENT APPLICATION

(21) Application number : 91403430.1

(51) Int. Cl.[5] : C07F 7/18

(22) Date of filing : 17.12.91

(30) Priority : 19.12.90 JP 412220/90

(43) Date of publication of application :
24.06.92 Bulletin 92/26

(84) Designated Contracting States :
DE FR GB

(71) Applicant : SHIN-ETSU CHEMICAL CO., LTD.
6-1, Ohtemachi 2-chome
Chiyoda-ku Tokyo (JP)

(72) Inventor : Hideyoshi, Yanagisawa
21-1, Kokuga, Matsuida-machi
Usui-gun, Gunma-ken (JP)
Inventor : Masaaki, Yamaya
787-2, Yanase, Annaka-shi
Gunma-ken (JP)

(74) Representative : Armengaud Ainé, Alain et al
Cabinet ARMENGAUD AINE 3 Avenue
Bugeaud
F-75116 Paris (FR)

## (54) Novel organosilicon compound.

(57) A class of novel mercapto-substituted, long-chain alkyl-containing organosilane compounds is disclosed as represented by the general formula $(R^1O)_m(CH_3)_{3-m}Si-R^2-SH$, in which $R^1$ is a monovalent hydrocarbon group having 1 or 2 carbon atoms, $R^2$ is a divalent aliphatic hydrocarbon group having 6 to 12 carbon atoms and free from unsaturation and the subscript m is 1, 2 or 3. The compounds are useful as an adhesion improver between a resinous adhesive and an inorganic material, modifying agent in composite materials composed of an organic resin and an inorganic material as the dispersed phase, surface modifier of various inorganic materials, intermediate in the synthetic preparation of various kinds of organosilicon compounds and so on.

EP 0 491 622 A1

## BACKGROUND OF THE INVENTION

The present invention relates to a novel organosilicon compound not known in the prior art nor described in any literatures or, more particularly, to a novel organosilane compound having a mercapto-substituted hydrocarbon group suitable for use as an adhesion improver between a resinous adhesive and an inorganic material, modifying agent in composite materials composed of an organic resin and an inorganic material as the dispersed phase, surface modifier of various inorganic materials, intermediate in the synthetic preparation of various kinds of organosilicon compounds and so on.

## SUMMARY OF THE INVENTION

The novel organosilicon compound of the present invention is an organosilane compound having, in a molecule, at least one alkoxy group and one mercapto-substituted long-chain alkyl group as represented by the general formula

$$(R^1O)_m(CH_3)_{3-m}Si\text{-}R^2\text{-}SH, \qquad (I)$$

in which $R^1$ is a monovalent hydrocarbon group having 1 or 2 carbon atoms, i.e. methyl, ethyl or vinyl group, $R^2$ is a divalent aliphatic hydrocarbon group having 6 to 12 carbon atoms and free from unsaturation and the subscript m is 1, 2 or 3.

## BRIEF DESCRIPTION OF THE DRAWING

Figures 1 and 2 are each an infrared absorption spectrum and a $^1$H-NMR spectrum, respectively, of the inventive organosilicon compound prepared in Example 1.

## DETAILED DESCRIPTION OF THE PREFERRED EMBODIMENTS

Alkoxy silane compounds having a mercaptoalkyl group bonded to the silicon atom are not novel and various kinds of mercaptoalkyl-containing alkoxy silane compounds are prepared and used in the prior art in the applications mentioned above. Examples of known mercaptoalkyl-containing alkoxy silane compounds include 3-mercaptopropyl trimethoxy silane, 3-mercaptopropyl methyl dimethoxy silane, mercaptomethyl trimethoxy silane, mercaptomethyl-substituted phenetyl trimethoxy silanes and the like.

These mercaptoalkyl-containing alkoxy silane compounds are of course considerably effective when they are used in the above mentioned applications but the effectiveness thereof cannot be high enough as desired in some cases if not to mention the unpleasant order inherent in mercapto-containing compounds in general. Having their attention directed to this problem, the inventors have come to an idea that the reason for the above mentioned deficiency would presumably be that the mercapto group in the above named compounds is bonded to the silicon atom either through an alkylene group having always 3 or less of carbon atoms or through a phenethylene group.

Being led by this idea, the inventors have continued extensive investigations and arrived at a success to prepare various kinds of novel mercaptoalkyl alkoxy silane compounds as defined above, in which the mercapto group is bonded to the silicon atom through a divalent aliphatic saturated hydrocarbon group having 6 or more carbon atoms.

The novel organosilicon compound of the invention is represented by the above given general formula (I). In the formula, the symbol $R^1$ denotes a monovalent hydrocarbon group having 1 or 2 carbon atoms including methyl, ethyl and vinyl groups or, in particular, methyl and ethyl groups. $R^2$ in the formula is a divalent aliphatic hydrocarbon group having 6 to 14 carbon atoms and free from unsaturation and serves as a linking unit between the silicon atom and the mercapto group -SH. In particular, the group $-R^2SH$ is an ω-mercapto-n-alkyl group of the formula $-(CH_2)_n-SH$ or a 1-methyl-ω-mercapto-n-alkyl group of the formula $-CH(CH_3)-(CH_2)_{n-2}-SH$, in which n is a positive integer of 6 to 12, and is exemplified by 6-mercaptohexyl, 1-methyl-5-mercaptopentyl, 7-mercaptoheptyl, 1-methyl-6-mercaptohexyl, 8-mercaptooctyl, 1-methyl-7-mercaptoheptyl, 9-mercaptononyl, 1-methyl-8-mercaptooctyl, 10-mercaptodecyl, 1-methyl-9-mercaptononyl, 11-mercaptoundecyl, 1-methyl-10-mercaptodecyl, 12-mercaptododecyl, 1-methyl-11-mercaptoundecyl, 13-mercaptotridecyl, 1-methyl-12-mercaptododecyl, 14-mercaptotetradecyl and 1-methyl-13-mercaptotridecyl groups. The subscript m in the general formula (I) is 1, 2 or 3.

Examples of the inventive organosilicon compound represented by the general formula (I) include: 6-mercaptohexyl trimethoxy silane; 8-mercaptooctyl trimethoxy silane; 10-mercaptodecyl trimethoxy silane; 12-mercaptododecyl trimethoxy silane; 14-mercaptotetradecyl trimethoxy silane; 6-mercaptohexyl triethoxy silane; 8-mercaptooctyl triethoxy silane; 10-mercaptodecyl triethoxy silane; 12-mercaptododecyl triethoxy silane and

14-mercaptotetradecyl triethoxy silane when m is 3; 6-mercaptohexyl methyl dimethoxy silane; 8-mercaptooctyl methyl dimethoxy silane; 10-mercaptodecyl methyl dimethoxy silane; 12-mercaptododecyl methyl dimethoxy silane; 14-mercaptotetradecyl methyl dimethoxy silane; 6-mercaptohexyl methyl diethoxy silane; 8-mercaptooctyl methyl diethoxy silane; 10-mercaptodecyl methyl diethoxy silane; 12-mercaptododecyl methyl diethoxy silane and 14-mercaptotetradecyl methyl diethoxy silane when m is 2; and 6-mercaptohexyl dimethyl methoxy silane; 8-mercaptooctyl dimethyl methoxy silane; 10-mercaptodecyl dimethyl methoxy silane; 12-mercaptododecyl dimethyl methoxy silane; 14-mercaptotetradecyl methyl dimethoxy silane; 6-mercaptohexyl dimethyl ethoxy silane; 8-mercaptooctyl dimethyl ethoxy silane; 10-mercaptodecyl dimethyl ethoxy silane; 12-mercaptododecyl dimethyl ethoxy silane and 14-mercaptotetradecyl dimethyl ethoxy silane when m is 1.

The above described novel organosilicon compound of the invention can be advantageously synthesized by the following general method disclosed in Japanese Patent Publication 50-7587 and U.S. Patent 3,631,194. Thus, a halogenoalkyl silane, which is a known compound and represented by the general formula

$$(R^1O)_m(CH_3)_{3-m}Si\text{-}R^2\text{-}X, \qquad (II)$$

in which X is a halogen atom and the other symbols each have the same meaning as defined above, is mixed with thiourea and the mixture is heated at a temperature in the range from 50 to 150 °C or, preferably, from 60 t0 80 °C for at least 30 minutes or for 30 minutes to 10 hours to effect the reaction forming an intermediate of the formula $(R^1O)_m(CH_3)_{3-m}Si\text{-}R^2\text{-}S\text{-}C(NH_2)(=NH)\cdot HX$ and then the reaction mixture is further reacted with ammonia at a temperature in the range from 50 to 150 °C for 1 to 15 hours.

If necessary, the reaction mixture in the above described reaction can be diluted by adding a suitable organic solvent. Examples of suitable solvents include aromatic hydrocarbon solvents such as benzene, toluene and xylene, aliphatic hydrocarbon solvents such as hexane, heptane, octane, nonane and decane, alcohols such as methyl alcohol and ethyl alcohol and ethers such as tetrahydrofuran and dioxane though not particularly limitative thereto.

Alternatively, the novel organosilicon compound of the invention can be synthesized in a one-step process disclosed in Japanese Patent Publication 60-2312, in which the halogenoalkyl-containing silane compound of the general formula (II) is reacted with sodium hydrosulfide at a temperature in the range from 30 to 150 °C. If necessary, the reaction mixture in this reaction can also be diluted with an organic solvent exemplified by amide solvents such as dimethyl formamide in addition to those given as the examples of the solvent used in the first route of the synthetic method.

The novel organosilane compound of the invention can be used as an adhesion improver between a resinous adhesive and an inorganic material, modifying agent in composite materials composed of an organic resin and an inorganic material as the dispersed phase, surface modifier of various inorganic materials, intermediate in the synthetic preparation of various kinds of organosilicon compounds and so on. When the inventive organosilicon compound is used in these applications, the results obtained thereby would be more satisfactory than in the use of conventional mercaptoalkyl-containing alkoxy silanes presumably due to the flexibility of the long-chain linking divalent group $R^2$ having a large number of carbon atoms between the siicon atom and the mercapto group to provide mobility thereto.

When a composite material is prepared by compounding an organic resin with an inorganic finely divided material after a treatment with the inventive organosilicon compound, for example, the reinforcing effect by the inorganic material or the adhesive bonding between the inorganic material and the organic resin can be improved as a consequence of an increase in the reactivity therebetween which is presumably due to the increased freedom for the mobility of the mercapto groups having reactivity with the organic resin as spaced from the silicon atom having affinity with the inorganic material by a long-chain linking group $R^2$ therebetween.

When the inventive organosilicon compound is used as a modifying agent of an organic resin or a composition thereof, furthermore, the organic resin or a composition thereof can be rendered room temperature-curable or moisture-curable to be capable of giving a cured body having excellent mechanical properties including flexibility.

A further advantage obtained in the use of the inventive organosilicon compound is that the unpleasant odor inherent in mercapto-containing compounds in general is less intense with the inventive compound than conventional mercaptoalkyl-containing alkoxy silanes presumably due to the decreased volatility as a consequence of the large molecular weight of the linking unit between the mercapto group and the silicon atom.

In the following, examples are given to more fully illustrate the synthetic procedure and characterization of the inventive organosilicon compounds.

## Example 1.

Into a flask of 1 liter capacity equipped with a stirrer, thermometer, reflux condenser and dropping funnel were introduced 341 g (1.0 mole) of 10-bromodecyl trimethoxy silane, 91.2 g (1.2 moles) of thiourea, 91.2 g of

methyl alcohol and 0.85 g of sodium iodide to form a reaction mixture which was heated at 60 to 70 °C for 3 hours. Thereafter, ammonia gas was blown into the reaction mixture at 60 °C for 5 hours at a rate of 20 ml/minute.

After completion of the reaction in the above described manner, the reaction mixture was kept standing so that it was separated into layers, of which the upper layer was taken and subjected to distillation under reduced pressure to give 217.6 g of a clear, light yellow liquid as a fraction boiling at 127 °C under a pressure of 0.001 Torr. This liquid product consisted of a single component in a purity of 97.7% according to the result of the gas chromatographic analysis.

This product could be identified to be 10-mercaptodecyl trimethoxy silane from the results shown below obtained by the elementary analysis, infrared absorption spectrophotometry and nuclear magnetic resonance spectroscopy. Accordingly, the above mentioned yield of the product corresponds to 73.6% of the theoretical value.

Elementary analysis

| | C | H | Si | S |
|---|---|---|---|---|
| Calculated, %, for $C_{13}H_{30}O_3SiS$ | 53.01 | 10.27 | 9.54 | 10.89 |
| Found, % | 52.91 | 10.22 | 9.61 | 10.95 |

Infrared absorption spectrophotometry (see Figure 1)

| | |
|---|---|
| 1089, 1192 $cm^{-1}$ | : Si-O-C |
| 1462, 2854, 2926 $cm^{-1}$ | : C-H |
| 2576 $cm^{-1}$ | : S-H |

$^1$H-Nuclear magnetic resonance spectrometry (see Figure 2)

(internal standard: benzene; $\delta$ = 7.24 ppm)

$\delta$ = 3.50 ppm (s, 9H) : Si-OC$\underline{H}_3$

$\delta$ = 0.33 - 0.83 ppm (broad-t, 2H) : Si-C$\underline{H}_2$-$(CH_2)_8$-$CH_2$-SH

$\delta$ = 1.10 - 1.93 ppm (m, 17H) : Si-$CH_2$-$(C\underline{H}_2)_8$-$CH_2$-SH and Si-$CH_2$-$(CH_2)_8$-$CH_2$-S$\underline{H}$

$\delta$ = 2.30 - 2.73 ppm (broad-q, 2H): Si-$CH_2$-$(CH_2)_8$-C$\underline{H}_2$-SH

Example 2.

The synthetic procedure was substantially the same as in Example 1 excepting replacement of the 10-bromodecyl trimethoxy silane with the same molar amount (297.3 g) of 6-bromohexyl methyl diethoxy silane. The reaction mixture after completion of the reaction was kept standing so that it was separated into layers, of which the upper layer was taken and subjected to distillation under reduced pressure to give 177.1 g of a clear, light yellow liquid as a fraction boiling at 102 to 105 °C under a pressure of 3 mmHg. This liquid product consisted of a single component in a purity of 96.8% according to the result of the gas chromatographic analysis.

This product could be identified to be 6-mercaptohexyl methyl diethoxy silane from the results shown below obtained by the elementary analysis, infrared absorption spectrophotometry and nuclear magnetic resonance

spectroscopy. Accordingly, the above mentioned yield of the product corresponds to 71.0% of the theoretical value.

Elementary analysis

| | C | H | Si | S |
|---|---|---|---|---|
| Calculated, %, for $C_{11}H_{26}O_2SiS$ | 52.75 | 10.46 | 11.21 | 12.80 |
| Found, % | 52.62 | 10.31 | 11.30 | 12.89 |

Infrared absorption spectrophotometry

| | |
|---|---|
| 953, 1081, 1109, 1167, 1394 $cm^{-1}$ | : $Si\text{-}O\text{-}CH_2CH_3$ |
| 1465, 2855, 2923 $cm^{-1}$ | : C-H |
| 2575 $cm^{-1}$ | : S-H |
| 1256 $cm^{-1}$ | : $Si\text{-}CH_3$ |

$^1$H-Nuclear magnetic resonance spectrometry

(internal standard: benzene; $\delta = 7.24$ ppm)

$\delta = 0.02$ ppm (s, 3H) : $Si\text{-}C\underline{H}_3$

$\delta = 1.00 - 1.95$ ppm (m, 15H) : $Si\text{-}O\text{-}CH_2\text{-}C\underline{H}_3$

$Si\text{-}CH_2\text{-}(C\underline{H}_2)_4\text{-}CH_2\text{-}SH$

and $Si\text{-}CH_2\text{-}(CH_2)_4\text{-}CH_2\text{-}S\underline{H}$

$\delta = 3.75$ ppm (q, 4H) : $Si\text{-}O\text{-}C\underline{H}_2\text{-}CH_3$

$\delta = 0.30 - 0.85$ ppm (broad-t, 2H) : $Si\text{-}C\underline{H}_2\text{-}(CH_2)_4\text{-}CH_2\text{-}SH$

$\delta = 2.31 - 2.76$ ppm (broad-q, 2H): $Si\text{-}CH_2\text{-}(CH_2)_4\text{-}C\underline{H}_2\text{-}SH$

Example 3.

The synthetic procedure was substantially the same as in Example 1 excepting replacement of the 10-bromodecyl trimethoxy silane with the same molar amount (321.0 g) of 14-chlorotetradecyl dimethyl methoxy silane. The reaction mixture after completion of the reaction was kept standing so that it was separated into layers, of which the upper layer was taken and subjected to concentration by evaporation at 150 °C under a reduced pressure of 3 mmHg followed by removal of the insoluble matter precipitated upon concentration of the liquid by filtration to give 285.3 g of a clear, brown liquid. This liquid product consisted of a single component in a purity of 94.3% according to the result of the gas chromatographic analysis.

This product could be identified to be 14-mercaptotetradecyl dimethyl methoxy silane from the results shown below obtained by the elementary analysis, infrared absorption spectrophotometry and nuclear magnetic resonance spectroscopy. Accordingly, the above mentioned yield of the product corresponds to 89.6% of the theoretical value.

Elementary analysis

| | C | H | Si | S |
|---|---|---|---|---|
| Calculated, %, for $C_{17}H_{38}OSiS$ | 64.08 | 12.02 | 8.81 | 10.06 |
| Found, % | 63.89 | 11.87 | 8.96 | 10.18 |

Infrared absorption spectrophotometry .

| | |
|---|---|
| 1091, 1190 $cm^{-1}$ | : Si-O-C |
| 1462, 2854, 2934 $cm^{-1}$ | : C-H |
| 2576 $cm^{-1}$ | : S-H |
| 1258 $cm^{-1}$ | : Si-C |

$^1$H-Nuclear magnetic resonance spectrometry

(internal standard: benzene; $\delta$ = 7.24 ppm)

$\delta$ = 0.00 ppm (s, 6H) : Si-C$\underline{H}_3$

$\delta$ = 3.52 ppm (s, 3H) : Si-O-C$\underline{H}_3$

$\delta$ = 0.29 - 0.81 ppm (broad-t, 2H) : Si-C$\underline{H}_2$-$(CH_2)_{12}$-$CH_2$-SH

$\delta$ = 1.08 - 1.98 ppm (m, 25H) : Si-$CH_2$-(C$\underline{H}_2$)$_{12}$-$CH_2$-SH and Si-$CH_2$-$(CH_2)_{12}$-$CH_2$-S$\underline{H}$

$\delta$ = 2.28 - 2.75 ppm (broad-q, 2H): Si-$CH_2$-$(CH_2)_{12}$-C$\underline{H}_2$-SH

Example 4.

Into a flask of 1 liter capacity equipped with a stirrer, thermometer, reflux condenser and dropping funnel were introduced 170.5 g (0.5 mole) of 10-bromodecyl trimethoxy silane which was heated at 60 °C and then 67.2 g of a methyl alcohol solution containing 0.6 mole of sodium hydrosulfide were added dropwise thereinto at such a rate that the temperature of the reaction mixture in the flask was kept at 60 to 70 °C followed by further continued agitation of the mixture at 70 °C for 3 hours. Thereafter, 34.2 g (0.25 mole) of n-butyl bromide to react with the excess of sodium hydrosulfide were added dropwise into the mixture in the flask at 70 °C followed by further continued agitation of the mixture at 70 °C for 3 hours.

The reaction mixture was filtered and the filtrate was subjected to distillation under reduced pressure to give 95.3 g of a clear, light yellow liquid as a fraction boiling at 141 °C under a pressure of 0.015 Torr. This liquid product consisted of a single component in a purity of 96.8% according to the result of the gas chromatographic analysis.

This product could be identified to be 10-mercaptodecyl trimethoxy silane from the results obtained by the elementary analysis, infrared absorption spectrophotometry and nuclear magnetic resonance spectroscopy which were substantially identical with those in Example 1. Accordingly, the above mentioned yield of the product corresponds to 64.8% of the theoretical value.

## Claims

1. A mercaptoalkyl alkoxy silane compound represented by the general formula

$$(R^1O)_m(CH_3)_{3-m}Si-R^2-SH,$$

in which $R^1$ is a monovalent hydrocarbon group having 1 or 2 carbon atoms, $R^2$ is a divalent aliphatic hydrocarbon group having 6 to 12 carbon atoms and free from unsaturation and the subscript m is 1, 2 or 3.

2. The mercaptoalkyl alkoxy silane compound as claimed in claim 1 in which the group denoted by $R^1$ is a methyl or ethyl group.

3. The mercaptoalkyl alkoxy silane compound as claimed in claim 1 in which the mercaptoalkyl group denoted by $-R^2-SH$ is selected from the class consisting of ω-mercapto-n-alkyl groups of the formula $-(CH_2)_n-SH$ and 1-methyl-ω-mercaptoalkyl groups of the formula $-CHCH_3-(CH_2)_{n-2}-SH$, in which the subscript n is a positive integer in the range from 6 to 12.

4. The mercaptoalkyl alkoxy silane compound as claimed in claim 1 in which the group denoted by $R^2-SH$ is selected from the class consisting of 6-mercaptohexyl, 1-methyl-5-mercaptopentyl, 7-mercaptoheptyl, 1-methyl-6-mercaptohexyl, 8-mercaptooctyl, 1-methyl-7-mercaptoheptyl, 9-mercaptononyl, 1-methyl-8-mercaptooctyl, 10-mercaptodecyl, 1-methyl-9-mercaptononyl, 11-mercaptoundecyl, 1-methyl-10-mercaptodecyl, 12-mercaptododecyl, 1-methyl-11-mercaptoundecyl, 13-mercaptotridecyl, 1-methyl-12-mercaptododecyl, 14-mercaptotetradecyl and 1-methyl-13-mercaptotridecyl groups.

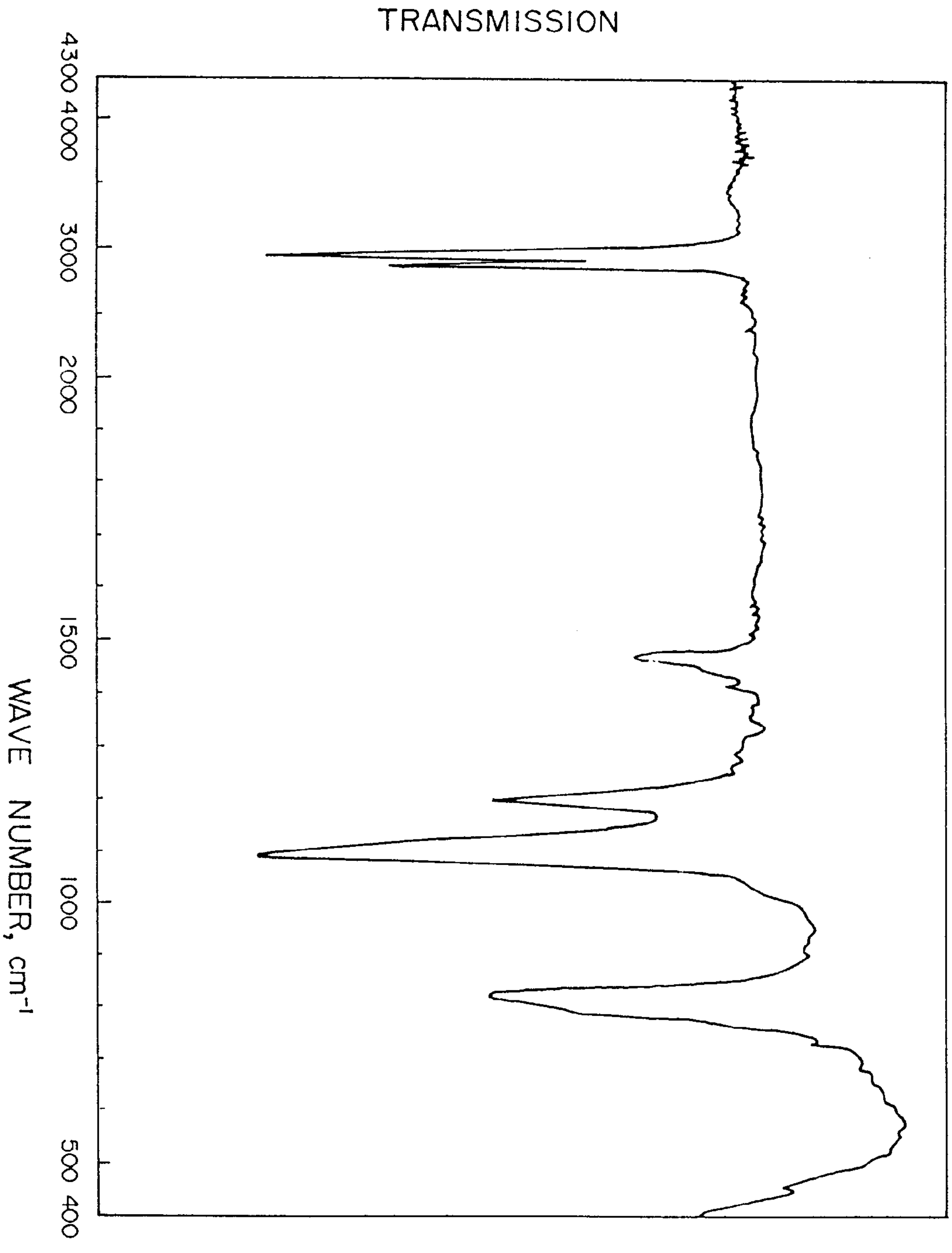
TRANSMISSION
4300 4000
3000
2000
1500
1000
500 400
WAVE NUMBER, cm-1

FIG. I

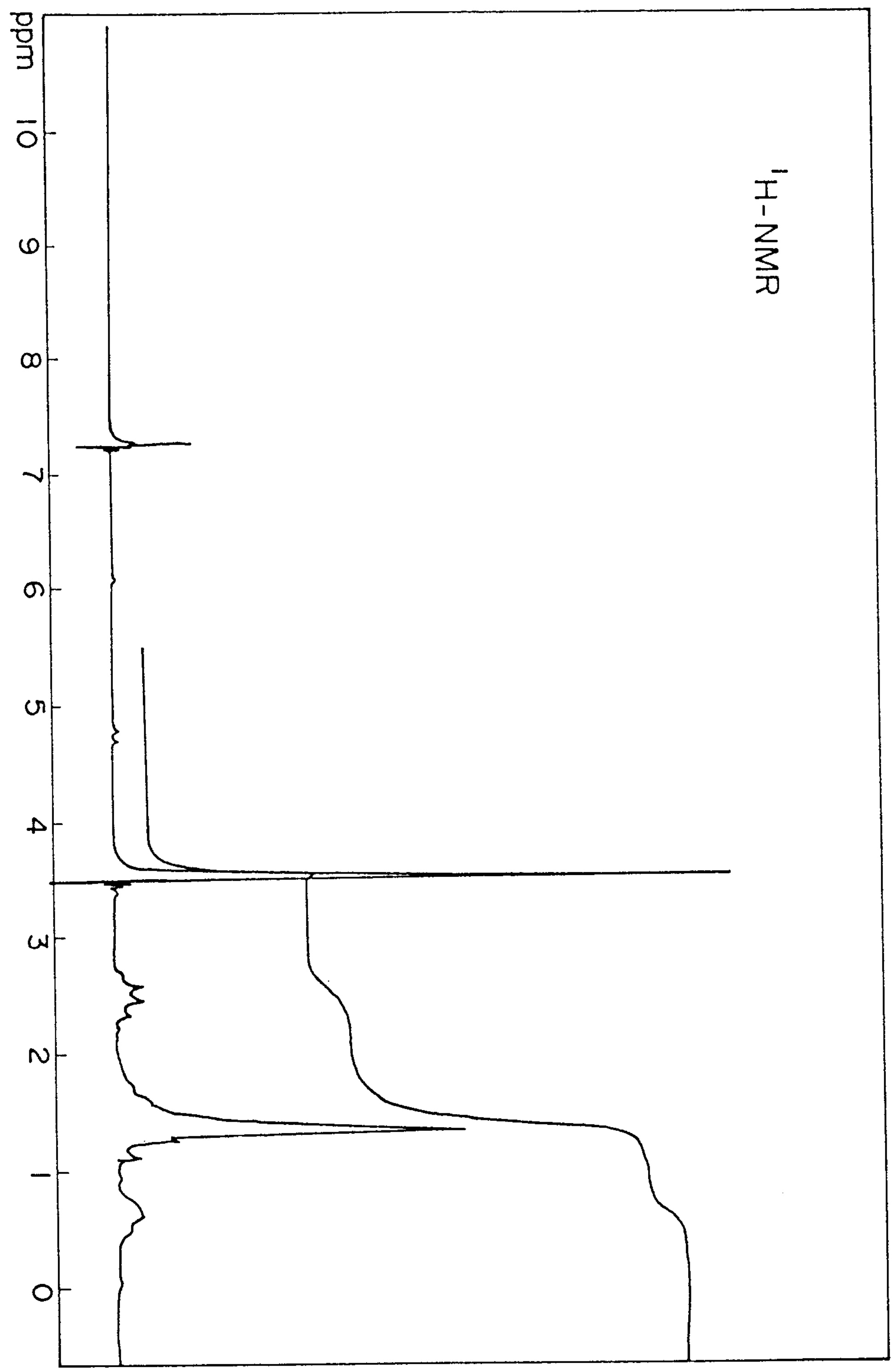


FIG. 2

European Patent Office

# EUROPEAN SEARCH REPORT

Application Number

EP 91 40 3430

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 692 812 (BERGER, A.)<br>* the whole document *<br>--- | 1-4 | C07F7/18 |
| X | US-A-3 346 405 (VIVENTI, R.V.)<br>* the whole document *<br>--- | 1-4 | |
| X | US-A-4 962 217 (KATAYAMA, S.)<br>* the whole document *<br>--- | 1-4 | |
| A | US-A-4 012 403 (PUI MUI, J. Y.)<br>* the whole document *<br>--- | 1-4 | |
| A | CHEMICAL ABSTRACTS, vol. 111, 1989, Columbus, Ohio, US;<br>abstract no. 175286K,<br>KELNAR, I. ET AL: 'CROSSLINKING OF PVC BY ORGANOFUNCTIONAL SILANES'<br>page 48 ;<br>* abstract *<br>& SB. VYS. SK. CHEM.-TECHNOL. PRAZE, POLYM.: CHEM., VLASTNOSTI ZPRAC.<br>vol. S17, 1988,<br>pages 31 - 41;<br>--- | 1-4 | |
| | | | TECHNICAL FIELDS SEARCHED (Int. Cl.5 ) |
| | | | C07F |
| P,X | JP-A-397 734 (KANSAI PAINT CO., LTD.)<br>* the whole document *<br>----- | 1-4 | |

The present search report has been drawn up for all claims

| Place of search | Date of completion of the search | Examiner |
|---|---|---|
| THE HAGUE | 27 FEBRUARY 1992 | RINKEL L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)